**Europäisches Patentamt**

**European Patent Office**

**Office européen des brevets**

(19)

(11) Veröffentlichungsnummer: **0 180 050**
**B1**

# EUROPÄISCHE PATENTSCHRIFT

(12)

(45) Veröffentlichungstag der Patentschrift:
**30.03.88**

(51) Int. Cl.⁴: **B 21 D 43/04**, B 30 B 15/30

(21) Anmeldenummer: **85112443.8**

(22) Anmeldetag: **02.10.85**

(54) **Antriebsvorrichtung für Werkstückträger von Bearbeitungsmaschinen.**

(30) Priorität: **05.10.84 DE 3436576**

(43) Veröffentlichungstag der Anmeldung:
**07.05.86 Patentblatt 86/19**

(45) Bekanntmachung des Hinweises auf die Patenterteilung:
**30.03.88 Patentblatt 88/13**

(84) Benannte Vertragsstaaten:
**AT BE CH DE FR GB IT LI LU NL SE**

(56) Entgegenhaltungen:
**DE - A - 1 950 456**
**DE - B - 2 460 338**
**DE - C - 164 830**
**DE - C - 3 233 428**

(73) Patentinhaber: **Strothmann, Wilfried, Driburger Strasse 2, D-4800 Bielefeld 14 (DE)**

(72) Erfinder: **Strothmann, Wilfried, Driburger Strasse 2, D-4800 Bielefeld 14 (DE)**

(74) Vertreter: **Brake, Klaus, von-Weber-Strasse 42, D-8522 Herzogenaurach (DE)**

**Beschreibung**

Die Erfindung betrifft eine Antriebsvorrichtung für Bearbeitungsmaschinen, Beschickungs- und Entladevorrichtungen od. dgl., mit einem in einer Schlittenführung horizontal verfahrbaren Schlitten, an welchem ein Werkstückträger oder Werkzeugträger höhenverschiebbar gelagert ist, und mit einem stationären Antrieb zur Höhenverschiebung einer den Werkstückträger haltenden Tragsäule, der mit einer längs der Schlittenführung drehbar gelagerten Antriebswelle verbunden ist, auf welcher ein mit der Antriebswelle drehbares Antriebsrad verschiebbar aufgesteckt ist, wobei an der äusseren Oberfläche der Antriebswelle längs einer Mantellinie eine Führungsbahn für das Antriebsrad angeordnet ist.

Aus der DE-C-3 233 428 ist eine Beschickungs- und Entnahmevorrichtung für Pressen mit einem horizontal verfahrbaren Schlitten bekannt, wobei an dem Schlitten ein Werkstückträger höhenverschiebbar gelagert ist. Als Antrieb zur Höhenverschiebung einer den Werkstückträger haltenden Tragsäule ist ein Motor in einer waagerechten Schlittenführung stationär angeordnet. Dabei ist das Zugmittel, beispielsweise ein Zahnriemen oder ein Drahtseil an einem Ende der Schlittenführung befestigt, erstreckt sich längs der Schlittenführung bis zum Schlitten, wird dort an Umlenkrollen des Schlittens und an einer Umlenkrolle der an dem Schlitten gelagerten Tragsäule umgelenkt, läuft von dort weiter zur Antriebsscheibe des am anderen Ende der Schlittenführung angeordneten Antriebsmotors und läuft von dort zurück an der Schlittenführung entlang über den Schlitten und die Tragsäule zu dem vom Motor abgewandten Ende der Schlittenführung, wo es wieder befestigt ist. Durch Drehung der Antriebsscheibe lässt sich mit diesem Zugmittel die Tragsäule anheben oder absenken.

Diese Ausführung hat den Nachteil, dass für die Übertragung der Drehbewegung der Antriebsscheibe und die Umsetzung dieser Bewegung in einer Hubbewegung der Tragsäule das lange Zugmittel erforderlich ist, welches länger als die doppelte Länge der Schlittenführung sein muss. Bei einer solchen grossen Länge des elastischen Zugmittels können Längenänderungen auftreten, die sich ungünstig auf die exakte Arbeitsweise der Vorrichtung auswirken. Selbst wenn über Spannschrauben eine hohe Vorspannung in das Zugmittel gebracht wird, können infolge von Temperaturänderungen der Raumluft unerwünscht hohe Längenänderungen des Zugmittels auftreten.

Aus der DE-A-1 777 355 ist eine Antriebsvorrichtung der eingangs genannten Art, nämlich eine Transporteinrichtung zum Transport von Werkstücken zwischen nebeneinanderstehenden Pressen bekannt. Als Antriebswelle ist dort eine Keilwelle verwendet, auf die das Antriebsrad mit einem entsprechenden Keilriemenprofil aufgesteckt ist. Die Verzahnung des Antriebsrades steht mit der Verzahnung einer Zahnstange im Eingriff. Diese Ausbildung ist wegen des Keilwellenprofils sehr arbeitsaufwendig und daher teuer. Die Keilwelle hat als massive Welle eine grosse Masse und damit ein grosses Trägheitsmoment, so dass grosse Antriebsleistungen zum Beschleunigen und Abbremsen der Drehbewegung der Keilwelle und des Antriebsrades erforderlich sind. Eine massive Welle hat darüberhinaus gegenüber einer Hohlwelle bei gleichem Gewicht eine geringere Torsionsfestigkeit. Ein weiterer Nachteil besteht darin, dass zwischen dem Antriebsrad und der Antriebswelle während der Verschiebung des Antriebsrades eine grosse Reibungskraft auftritt, die einen vorzeitigen Verschleiss und damit für die Lage der Anordnung des Werkstückträgers Ungenauigkeiten zur Folge hat.

Der Erfindung liegt die Aufgabe zugrunde, eine Antriebsvorrichtung zu schaffen, welche zu allen Zeiten eine exakte Übertragung der Antriebsbewegung auf die Tragsäule und den an dieser befestigten Werkstückträger ermöglicht, wobei die erforderliche Antriebsleistung bei hohen Verschiebe- und Drehgeschwindigkeiten des Antriebsrades möglichst gering sein soll.

Diese Aufgabe wird erfindungsgemäss dadurch gelöst, dass die Führungsbahn als Führungswelle mit kreisförmigem Querschnitt ausgebildet ist, längs einer Aufnahmenut der Antriebswelle an dieser anliegt und dort mittels Schrauben befestigt ist, die von dem inneren Hohlraum der als Hohlwelle ausgeführten Antriebswelle aus durch Bohrungen in Gewindebohrungen der Führungswelle eingeschraubt sind.

Auf diese Weise ist ein Keilwellenprofil an der Antriebswelle und dem aufgesteckten Antriebsrad entbehrlich. Die zusätzliche Führungsbahn verhindert eine Verdrehung des Antriebsrades gegenüber der Antriebswelle auf deren gesamter Länge. Eine Führungswelle mit kreisförmigem Querschnitt ist ein einfach aufgebautes Teil, das ohne grossen besonderen Arbeitsaufwand verfügbar ist. Da die Antriebswelle als Hohlwelle ausgeführt ist, ermöglicht sie es, die Schrauben von dem inneren Hohlraum aus durch Bohrungen in Gewindebohrungen der Führungswelle einzuschrauben, so dass die gesamte, nicht anliegende äussere Oberfläche für die Führung des Antriebsrades uneingeschränkt zur Verfügung steht.

Die Genauigkeit der Lage des Antriebsrades an der Antriebswelle lässt sich noch dadurch erhöhen, dass in bevorzugter Weise an der Antriebswelle in einer gemeinsamen Durchmesserebene zwei gleiche Führungswellen gegenüberliegend angeordnet sind.

Die erfindungsgemässe Ausführung hat mehrere Vorteile. Beispielsweise ergibt sich eine sehr spielarme Übertragung zwischen der Antriebswelle und dem Antriebsrad. Bei Verwendung von Führungsbuchsen, insbesondere Kugelbuchsen, zwischen dem Antriebsrad und den Führungswellen ergibt sich eine rollende Übertragung der Momente, so dass die auftretenden Reibungskräfte sehr gering gehalten werden. Die erfindungsgemässe Ausführung ist durch Verwendung von Normteilen, wie den Kugelbuchsen, sehr wartungsfreundlich. Durch Verwendung eines Antriebsriemens, der das Antriebsrad auf einem Bogen von ca. 180° umschlingt, ergibt sich ein geringer Verschleiss des Antriebsriemens und eine grosse Übertragungsgenauigkeit.

Die Anwendung der Antriebsvorrichtung ist nicht auf Pressen beschränkt. Sie ist auch bei Ladeportalen und Werkzeugmaschinen ganz allgemein möglich.

Bevorzugte Ausführungsformen der Erfindung sind in den Schutzansprüchen enthalten.

Ein Ausführungsbeispiel der Erfindung ist in der Zeichnung dargestellt und wird im folgenden näher beschrieben. Es zeigen:

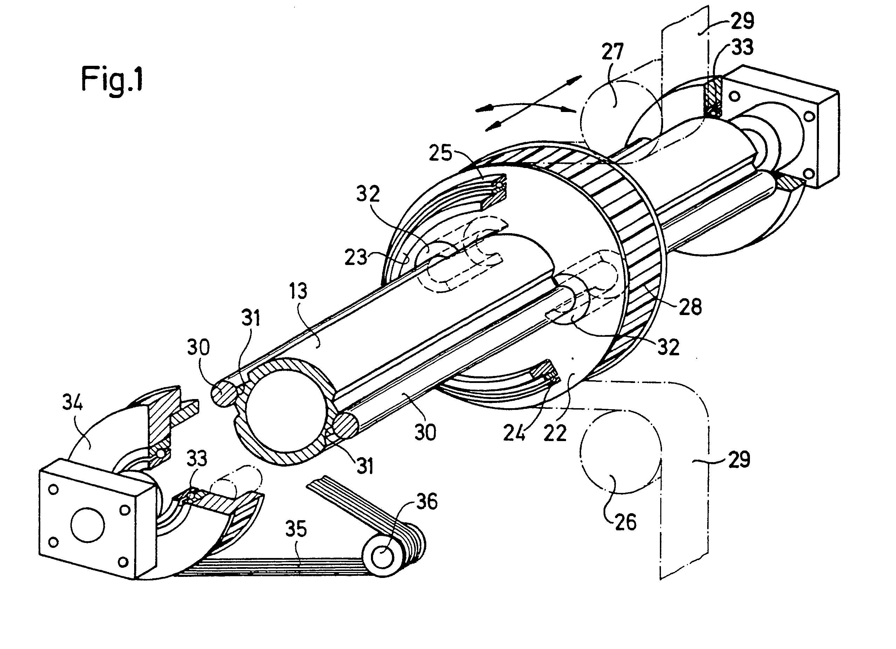

Fig. 1 eine perspektivische Darstellung der Antriebswelle mit aufgestecktem Antriebsrad;

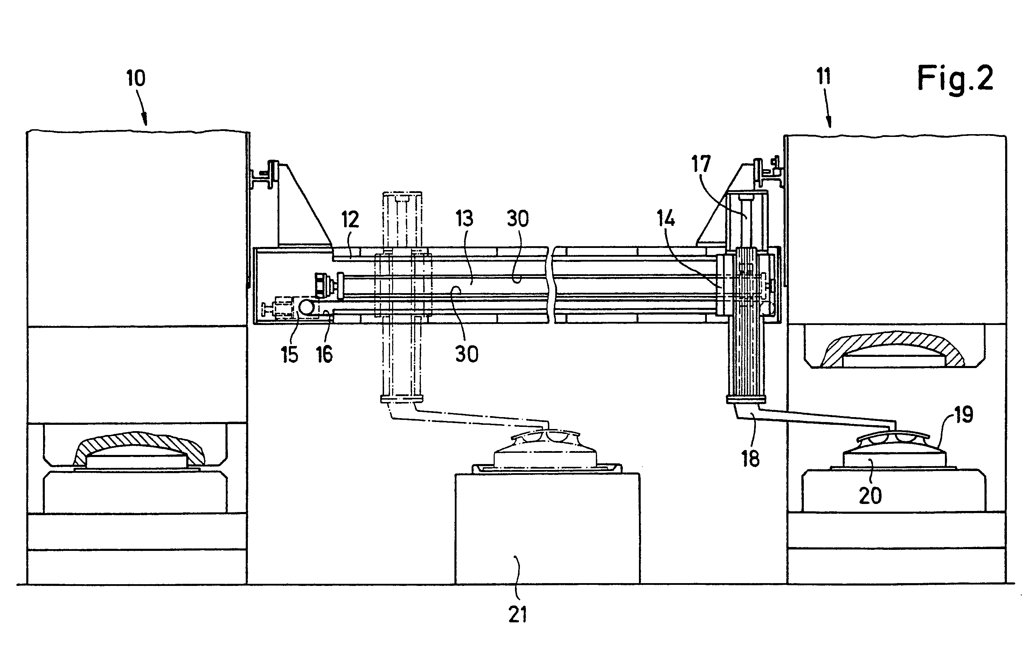

Fig. 2 eine zwischen einer linksseitigen Presse und einer rechtsseitigen Presse angeordnete Schlittenführung mit dem Schlitten, der Tragsäule und dem Werkstückträger;

Fig. 3 eine Draufsicht auf die zwischen den Pressen angeordnete Schlittenführung mit zwei parallelen Antriebswellen mit Schlitten, Tragsäulen und Werkstückträgern.

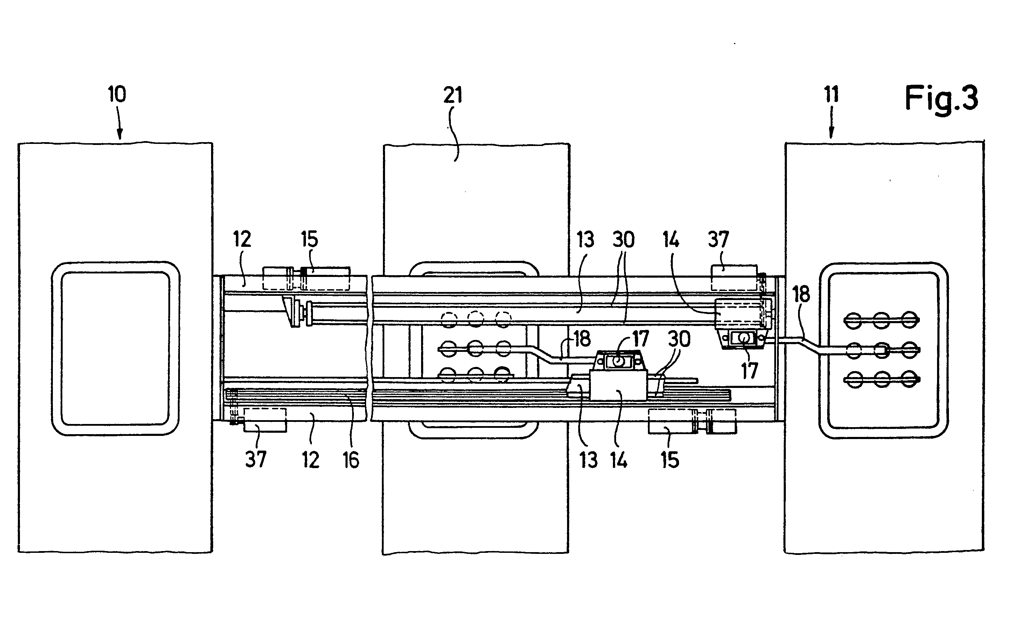

Die Beschickungs- und Entnahmevorrichtung weist eine zwischen einer linksseitigen Presse 10 und einer rechtsseitigen Presse 11 aufgehängte waagerechte Schlittenführung 12 auf, an der gemäss Fig. 3 der Zeichnung zwei parallele waagerechte Antriebswellen 13 drehbar gelagert sind. Jede Antriebswelle 13 ist mit einem an der Schlittenführung verschiebbar angeordneten Schlitten 14 verbunden, der längs der Antriebswelle 13 geradlinig verschiebbar ist. Zur Verschiebung des Schlittens 14 längs der Antriebswelle 13 ist jeweils ein Antrieb 15 an einem Ende der Schlittenführung 12 angeordnet. Dieser treibt einen längs der Schlittenführung 12 sich erstreckenden, am anderen Ende auf eine Umlenkrolle gespannten Riemen 16 an, der an dem Schlitten 14 befestigt ist.

Der Schlitten 14 dient zur Lagerung einer senkrecht verschiebaren Tragsäule 17, an deren unterem Ende ein Werkstückträger 18 befestigt ist. Dieser ist für die Auflage oder Abnahme eines Pressteils 19 an dem Unterwerkzeug 20 der Presse 10 bzw. 11 vorgesehen. Beispielsweise mit Saugnäpfen kann der Werkstückträger 18 das Pressteil 19 ergreifen, durch Hochfahren der Tragsäule 17 an dem Schlitten das Pressteil 19 von dem Unterwerkzeug 20 abheben und durch waagerechtes Entlangfahren des Schlittens 14 an der Schlittenführung 12 das Pressteil 19 über eine Ablagestation 21 fahren und dort durch Absenken der Tragsäule 17 ablegen.

Zur Höhenverschiebung der Tragsäule 17 ist innerhalb des Schlittens 14 ein Antriebsrad 22 gelagert, welches auf die Antriebswelle 13 aufgesteckt ist und sich mit dieser drehen kann. An seinen beiden Stirnseiten weist das Antriebsrad 22 abstehende Tragringe 23 für Wälzlager 24 auf, wobei jeweils die äusseren Lagerringe 25 der Wälzlager 24 innerhalb des Schlittens abgestützt sind.

In dem Schlitten sind in der Nähe des Antriebsrades 22 zwei Umlenkrollen 26 und 27 mit zur Antriebswelle 13 parallelen Achsen übereinander gelagert. Das Antriebsrad 22 ist mit einer Verzahnung 28 versehen, so dass ein senkrecht von unten kommender Zahnriemen 29 an der unteren Umlenkrolle 26 in die Waagerechte umgelenkt und sich mit der am Umfang des Antriebsrades 22 ausgebildeten Verzahnung 28 im Eingriff befindet. Der auf diese Weise nach oben verlaufende Zahnriemen 29 wird am Antriebsrad 22 um 180° umgelenkt und gelangt waagerecht zur oberen Umlenkrolle 27, wo er wieder in die Senkrechte umgelenkt wird. Das untere Ende und das obere Ende des Zahnriemens 29 ist jeweils an der am Schlitten 14 senkrecht verschiebbar gelagerten Tragsäule 17 befestigt, so dass sich bei einer Drehung des Antriebsrades 22 um die Achse der Antriebswelle 13 die Tragsäule 17 entweder senkrecht aufwärts oder abwärts bewegen muss.

Die Antriebswelle 13 ist als Hohlwelle ausgeführt, so dass die drehbare Masse möglichst gering gehalten ist, um beim Antrieb und beim Bremsen geringe Beschleunigungen auf die Antriebswelle 13 aufbringen zu müssen. Die Ausführung als Hohlwelle hat ausserdem den Vorteil einer grossen Stabilität und damit eines grossen Widerstandes gegenüber der Torsion der Antriebswelle 13.

Das Antriebsrad 22 muss längs der Antriebswelle 13 leichtgängig verschiebbar sein, darf sich aber in Umfangsrichtung nicht gegenüber der Antriebswelle verdrehen, sondern nur gemeinsam mit der Antriebswelle 13 verdrehen lassen. Zu diesem Zweck sind an der äusseren Oberfläche der Antriebswelle 13 längs zweier Mantellinien zwei parallele Führungswellen 30 befestigt, die jeweils in einer der Oberfläche der Führungswelle 30 entsprechenden Aufnahmenut 31 dicht anliegen.

In dem Antriebsrad 22 ist für jede Führungswelle 30 eine Führungsbuchse 32 angeordnet, so dass das Antriebsrad 22 mit seinen Führungsbuchsen 32 auf die Führungswellen 30 aufgesteckt ist. Die Führungsbuchsen 32 können als Kugelbuchsen ausgeführt sein, die im Querschnitt die Form eines Kreisringausschnittes aufweisen. Dabei sind die Führungsbuchsen 32 auf einem Winkel von 90° geöffnet und erstrecken sich auf einem Winkel von 270°, so dass sie die Führungswellen 30 umgreifen, wobei die feste Verbindung der Führungswelle 30 mit der Antriebswelle 13 möglich ist. Die Ausführung der Führungsbuchsen 32 als Kugelbuchsen ermöglicht eine besonders leichtgängige Verschiebbarkeit des Antriebsrades 22 längs der Antriebswelle 13. Das Antriebsrad 22 lässt sich bei dieser Längsbewegung schnell auf eine hohe Geschwindigkeit von 5 m/s beschleunigen und ebenso schnell abbremsen. Die Führungsbuchsen 32 können handelsübliche Normteile sein, die sich leicht auswechseln lassen. Ebenso kann auch jede Führungswelle 30 als Normteil leicht ausgewechselt werden.

Die Antriebswelle 13 ist mit ihren Enden in Lagern 33 drehbar gelagert, die an der Schlittenführung 12 befestigt sind. Mindestens an einem Ende der Antriebswelle 13 ist diese mit einem angetriebenen Rad 34 eines Riementriebs verbunden, dessen Zahnriemen 35 von einem treibenden Rad 36 des Läufers eines an der Schlittenführung 12 stationär angeordneten Motors 37 antreibbar ist. Dieser Motor bewirkt also die Anhebung oder Absenkung der Tragsäule 17 mit dem Werkstückträger 18, was an jeder Stelle der Antriebswelle 13 möglich ist. Der Motor 37 braucht dabei nicht längs der Antriebswelle 13 mit dem Antriebsrad 22 bewegt zu werden, so dass seine Masse nicht beschleunigt und nicht abgebremst zu werden braucht. Bei der erfindungsgemässen Beschickungs- und Entnahmevorrichtung ist somit ein Linear- und Drehantrieb grösstmöglicher Biege- und Torsionsfestigkeit verwirklicht, der gleichzeitig als Träger für den horizontal verschiebbaren Schlitten 14 und für die daran vertikal verschiebbare Tragsäule 17 dient. Die für diese beiden Bewegungen erforderlichen

beiden Antriebe 15 und 37 sind vom Schlitten 14 getrennt angeordnet, so dass die zu beschleunigenden beweglichen Massen gering gehalten sind. Dadurch lassen sich extrem kleine Taktzeiten für sehr grosse Pressen-Überbrückungswege ermöglichen. Die Antriebswelle 13 kann ein stranggepresstes Profilteil sein und ist an beiden Enden in Wälzlagern 33 gelagert. Diese Lagerung kann an einem Ende der Antriebswelle oder an beiden Enden gleichzeitig eine Zahnriemenscheibe als angetriebenes Rad 34 enthalten, die den Antrieb für die Vertikalbewegung der Tragsäule 17 übernimmt. Das Antriebsrad 22 ist Bestandteil des längs der Antriebswelle 13 waagerecht verschiebbaren Schlittens 14. Dieser und die Tragsäule 17 können gemeinsam oder getrennt ihre Bewegungen ausführen. Die Verwendung von Zahnriementrieben gewährleistet eine spielarme Übertragung und Umsetzung der Drehbewegungen von den Antrieben 15 und 37 auf die hin- und hergehenden geradlinigen Bewegungen der Tragsäule 17 und des Antriebsrades 22. Ein Riemenschlupf tritt nicht auf.

Die erfindungsgemässe Beschickungs- und Entnahmevorrichtung bietet den Vorteil einer kürzest möglichen Wechselzeit für die Werkstücke und einer schnellstmöglichen Übergabe von einer Presse 10 zur anderen Presse 11. Durch eine konsequente Verwendung von Normbauteilen überall dort, wo langfristig Verschleiss auftreten kann, ergibt sich eine hohe Verfügbarkeit und Wartungsfreiheit. Als Antriebe können wartungsfreie Drehstromservomotoren eingesetzt werden. Die Lager 24 und 33 sind dauergeschmiert und die Führungsbahnen der Führungswellen 30 werden über die als Kugelbuchsen ausgeführten Führungsbuchsen 32 zentral geschmiert.

Durch den Einsatz frei programmierbarer Steuerungen ist der Bewegungsablauf für unterschiedliche Aufgaben schnell änderbar. Die Vakuumgreifsysteme der Werkstückträger 18 sind über Schnellkupplungen in kürzester Zeit auszutauschen. Ein besonderes System für den Zwischentransport der Werkstücke ist nicht erforderlich.

Die Vorrichtung kann zum Wechsel des Pressenwerkzeuges querverfahren werden, um den Arbeitsraum zugänglich zu machen. Durch Aufruf eines neuen Programms lässt sich auch der Aufwand hierfür gering halten.

Die erfindungsgemässe Beschickungs- und Entnahmevorrichtung kann als Be- und Entladegerät für eine einzelne Maschine ausgebildet sein, wenn sie nur eine einzige Schlittenführung 12 besitzt. Es ist aber auch möglich, zwei Pressen 10 und 11 miteinander zu verketten, wobei dann die Vorrichtung eine zweite Schlittenführung 12 zusätzlich erhält. In der Regel ist die Schlittenführung 12 zwischen zwei Pressen 10 und 11 aufgehängt. Wenn an einer Traverse zwei verschiebbare Schlitten 14 vorgesehen sind, so lassen sich diese unabhängig voneinander horizontal bewegen und die an ihnen gelagerten Tragsäulen 17 lassen sich ebenfalls unabhängig voneinander bewegen.

## Patentansprüche

1. Antriebsvorrichtung für Bearbeitungsmaschinen, Beschickungs- und Entladevorrichtungen od. dgl., mit einem in einer Schlittenführung (12) horizontal verfahrbaren Schlitten (14), an welchem ein Werkstückträger (18) oder Werkzeugträger höhenverschiebbar gelagert ist und mit einem stationären Antrieb zur Höhenverschiebung einer den Werkstückträger (18) haltenden Tragsäule (17), der mit einer längs der Schlittenführung (12) drehbar gelagerten Antriebswelle (13) verbunden ist, auf welcher ein mit der Antriebswelle (13) drehbares Antriebsrad (22) verschiebbar aufgesteckt ist, wobei an der äusseren Oberfläche der Antriebswelle (13) längs einer Mantellinie eine Führungsbahn für das Antriebsrad (22) angeordnet ist, dadurch gekennzeichnet, dass die Führungsbahn als Führungswelle (30) mit kreisförmigen Querschnitt ausgebildet ist, längs einer Aufnahmenut (31) der Antriebswelle (13) an dieser anliegt und dort mittels Schrauben befestigt ist, die von dem inneren Hohlraum der als Hohlwelle ausgeführten Antriebswelle (13) aus durch Bohrungen in Gewindebohrungen der Führungswelle (30) eingeschraubt sind.

2. Vorrichtung nach Anspruch 1, dadurch gekennzeichnet, dass an der Antriebswelle (13) mehrere parallele Führungsbahnen bzw. Führungswellen (30) befestigt sind.

3. Vorrichtung nach den Ansprüchen 1 und 2, dadurch gekennzeichnet, dass an der Antriebswelle (13) in einer gemeinsamen Durchmesserebene zwei gleiche Führungswellen (30) gegenüberliegend angeordnet sind.

4. Vorrichtung nach den Ansprüchen 1 bis 3, dadurch gekennzeichnet, dass das Antriebsrad (22) Führungsbuchsen (32) aufweist, mit welchen es auf den Führungswellen (30) aufgesteckt ist, wobei jede Führungsbuchse (32) im Querschnitt die Form eines Kreisringausschnitts aufweist.

5. Vorrichtung nach den Ansprüchen 1 bis 4, dadurch gekennzeichnet, dass die Führungsbuchsen (32) als Kugelbuchsen ausgeführt sind.

6. Vorrichtung nach den Ansprüchen 1 bis 5, dadurch gekennzeichnet, dass an den Stirnseiten des Antriebsrades (22) Tragringe (23) zur Aufnahme von Wälzlagern (24) angeordnet sind, deren äussere Lagerringe (25) in dem Schlitten (14) abgestützt sind.

7. Vorrichtung nach den Ansprüchen 1 bis 6, dadurch gekennzeichnet, dass das Antriebsrad (22) mit einer Verzahnung (28) versehen und über einen darauf aufgelegten und um Umlenkrollen (26, 27) geführten Zahnriemen (29) bzw. eine Zahnkette mit der Tragsäule (17) verbunden ist.

## Claims

1. Drive device for processing machines, charging devices, discharging devices or the like, with a sliding carriage (14), which is movable horizontally in a carriage guide (12) and at which a workpiece carrier (18) or tool carrier is borne to be vertically displaceable, and with a stationary drive for the vertical displacement of a carrier column (17) holding the workpiece carrier (18), which drive is connected with a drive shaft (13), which is rotatably borne along the carriage guide (12) and on which a drive wheel (22) rotatable with the drive shaft (13) is plugged to be displaceable, wherein a guide track for the drive wheel (22) is arranged along a generatrix at the outer surface of the drive shaft (13), characterised thereby, that the guide track is constructed as guide shaft (30) of circular cross-section, rests against the drive shaft (13) along a receiving groove (31) thereof and is fastened there by means of screws which are screwed into threaded bores of the guide shaft (30) through bores from the interior hollow space of the drive shaft (13) constructed as hollow shaft.

2. Drive device according to claim 1, characterised thereby, that several parallel guide tracks or guide shafts (30) are fastened at the drive shaft (13).

3. Drive device according to the claims 1 and 2, characterised thereby, that two like guide shafts (30) are arranged each lying opposite the other in a common diametral plane at the drive shaft (13).

4. Drive device according to the claims 1 to 3, characterised thereby, that the drive wheel (22) displays guide bushings (32), by which it is plugged onto the guide shafts (30), wherein each guide bushing (32) in cross-section displays the shape of a sector of a circular annulus.

5. Drive device according to the claims 1 to 4, characterised thereby, that the guide bushings (32) are constructed as spherical bushings.

6. Drive device according to the claims 1 to 5, characterised thereby, that carrier rings (23) for the reception of rolling bearings (24) are arranged at the end faces of the drive wheel (22), the outer bearing rings (25) of the carrier rings (23) being supported in the sliding carriage (14).

7. Drive device according to the claims 1 to 6, characterised thereby, that the drive wheel (22) is provided with a toothing (28) and connected through a toothed belt (29) or a gear chain, which is laid thereon and guided around deflecting rollers (26, 27), with the carrier column.

**Revendications**

1. Dispositif d'entraînement pour machines d'usinage, dispositifs de chargement et de déchargement ou analogues, comprenant un chariot (14) qui est déplaçable horizontalement dans un guidage de chariot (12) et sur lequel un porte-pièces (18) ou un porte-outil est supporté de manière à pouvoir être déplacé en hauteur, et un organe d'entraînement stationnaire pour le déplacement en hauteur d'une colonne de support (17) qui maintient le porte-pièces (18) et qui est reliée à un arbre d'entraînement (13) qui est supporté le long du guidage de chariot (12), de manière à pouvoir tourner, et sur lequel un roue d'entraînement (22) capable de pivoter avec l'arbre d'entraînement (13) est emmanchée de manière à pouvoir coulisser, une voie de guidage pour la roue d'entraînement (22) étant agencée sur la surface externe de l'arbre d'entraînement (13), le long d'une génératrice, caractérisé en ce que la voie de guidage est réalisée sous la forme d'un arbre de guidage (30) présentant une section transversale de forme circulaire, en ce qu'elle est en appui sur l'arbre d'entraînement (13) le long d'une rainure de réception (31) de ce dernier et en ce qu'elle est fixée là au moyen de vis qui, à partir de la cavité interne de l'arbre d'entraînement (13), réalisé sous la forme d'un arbre creux, sont vissées à travers des perforations dans des trous taraudés de l'arbre de guidage (30).

2. Dispositif suivant la revendication 1, caractérisé en ce que plusieurs voies de guidage et respectivement arbres de guidage (30) parallèles sont fixés sur l'arbre d'entraînement (13).

3. Dispositif suivant l'une des revendications 1 et 2, caractérisé en ce que deux arbres de guidage identiques (30) sont agencés de part et d'autre de l'arbre d'entraînement (13) dans un plan diamétral commun.

4. Dispositif suivant l'une des revendications 1 à 3, caractérisé en ce que la roue d'entraînement (22) présente des douilles de guidage (32) à l'aide desquelles elle est emmanchée sur les arbres de guidage (30), chaque douille de guidage (32) présentant en section transversale la forme d'un segment d'arc de cercle.

5. Dispositif suivant l'une des revendications 1 à 4, caractérisé en ce que les douilles de guidage (32) sont réalisées sous la forme de douilles à billes.

6. Dispositif suivant l'une des revendications 1 à 5, caractérisé en ce que sur les côtés frontaux de la roue d'entraînement (22) sont agencés des anneaux de support (23) destinés à recevoir des paliers à roulement (24) dont les anneaux de support externes (25) sont supportés dans le chariot (14).

7. Dispositif suivant l'une des revendications 1 à 6, caractérisé en ce que la roue d'entraînement (22) est pourvue d'une denture (28) et en ce qu'elle est reliée à la colonne de support (17) par l'intermédiaire d'une courroie dentée (29) ou respectivement d'une chaîne dentée, qui est appliquée sur la roue et est guidée autour de rouleaux de renvoi (26, 27).

Fig.1

Fig.2

Fig.3

0 180 050